# EUROPEAN PATENT APPLICATION

(11) **EP 1 512 527 A1**
(43) Date of publication of application: **09.03.2005**
(21) Application number: 04254628.3
(22) Date of filing: 31.07.2004
(51) Int. Cl.: B31B 7/14, B31B 17/00, B31B 7/26, B31B 7/60, B65D 3/06, B65D 3/22

(54) **Multilayer container and method and blank therefor**

(30) Priority: 14.08.2003 US 640705
(71) Applicant: Sonoco Development, Inc., Hartsville, South Carolina 29550 (US)
(72) Inventor: Rea, Keith R., Florence, South Carolina 29505 (US); Westphal, Teddy M., Florence, South Carolina 29501 (US)
(74) Representative: Kinsler, Maureen Catherine

(57) **Abstract**

The present invention provides a single wrap container (110) and a method for forming such a container (110) and a blank (100) therefor. The blank (100) and, hence, the container (110) are formed of a multilayer web (90) that has an inner liner ply (70) and an outer label ply (80), each adhered to opposite sides of a paper ply (60), which can be recycled paper. The multilayer web (90) is cut to a predetermined shape, for example, using a rotary die (30), thereby forming the blank (100). The container (110) can then be formed by singly wrapping the blank (100) so that helical wrapping is not required and a seam (118) formed by joining the edges (102,104) of the blank (100) is linear.

## Description

### BACKGROUND OF THE INVENTION

### 1) Field of the Invention

This invention relates to a container having a multilayer sidewall that is singly wrapped and a method for forming such a container.

### 2) Description of Related Art

A variety of multilayer structures are conventionally used for forming containers. Such structures can include layers formed of paper, polymers, metallic foils, and the like, depending on the intended use of the container. For example, interior liners can be formed of moisture and gas barrier materials, such as plastics and metals, for containers used for food products.

According to one conventional method of forming containers, the multiple plies of the multilayer structure are wound helically on a cylindrical mandrel, with the plies overlapping so that a continuous cylindrical tube is formed. As the plies are disposed on the mandrel, glue is provided between the plies, and the tube is compressed radially inward on the mandrel so that the plies are adhered. The plies can be continuously disposed on the mandrel as the formed tube is slid axially along the mandrel, and the tube is then cut, either on or off the mandrel, to form short cylindrical tube sections. The ends of each tube section can be closed, for example, by gluing or frictionally fitting a round cap to each end. The structure of the container is determined by the type and order of the plies that are disposed on the mandrel. The size is determined by the diameter of the mandrel and the interval between the cuts. However, non-cylindrical shapes can be difficult or impossible to form with such a method, especially shapes with non-uniform cross sections. Further, the helical seam extending around the resulting container can detract from the aesthetic appeal of the container, and can complicate pre-printing of the outer surface of the outer ply of the container.

Thus, there exists a need for an improved container and a method for forming the container. Preferably, the container should be formed of a multilayer structure that provides a moisture and/or gas barrier and can be formed at least partially of recycled materials such as recycled paper. The method should not require helical wrapping, and the resulting container should not have a helical seam. Further, the method should be useful for forming containers of varying shapes, including non-cylindrical shapes and shapes with non-uniform cross sections. Finally, the method should be compatible with pre-printed label materials to provide a container that is aesthetically appealing.

### BRIEF SUMMARY OF THE INVENTION

The present invention provides a single wrap container and a method for forming such a container and blanks therefor. The container is formed from a multilayer web having liner and label plies adhered on opposite sides of a paper ply. The multilayer web is cut with a die. The resulting die cut blank can be substantially flat and configured to be wrapped, or bent, to form the single wrap container.

According to one embodiment of the present invention, the paper ply can be recycled paper, which can be covered on either side by the liner and printed label plies. The multilayer web can be conditioned, for example with heat and pressure, and then cut with the die or first coiled into a roll. The label can be printed before or after being adhered to the paper ply.

The blank can also be bent to form a container, such as for food packaging. For example, the blank can be bent about 360 degrees, and first and second edges of the blank can be joined to form a linear interface. The first and second edges of the blank can be nonparallel so that the resulting container defines a space that is at least partially conical. At least one end of the container can be closed with an end member.

Thus, the container can be formed of a multilayer web sidewall that extends circumferentially between first and second edges joined at a seam. The sidewall has a paper ply with a liner ply adhered to the inner side and a label ply adhered to the outer side. The liner and label plies can be formed of polymers, and the label ply can be opaque and can have indicia on an outer surface. Thus, the multilayer web can include recycled paper while providing a moisture and/or gas barrier. Further, the label ply can be preprinted and can substantially cover the outer surface of the paper ply to provide aesthetic appeal for the container. In addition, the blanks can be singly wrapped to form containers of various sizes and shapes with substantially linear, i.e., non-helical, seams.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
Figure 1 is an elevation view of an apparatus for forming a container according to one embodiment of the present invention;
Figure 2 is a plan view of the apparatus of Figure 1;
Figure 3 is a plan view of a blank formed according to one embodiment of the present invention; and
Figure 4 is a perspective view of a container formed from the blank of Figure 3 according to one embodiment of the present invention.

### DETAILED DESCRIPTION OF THE INVENTION

The present invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

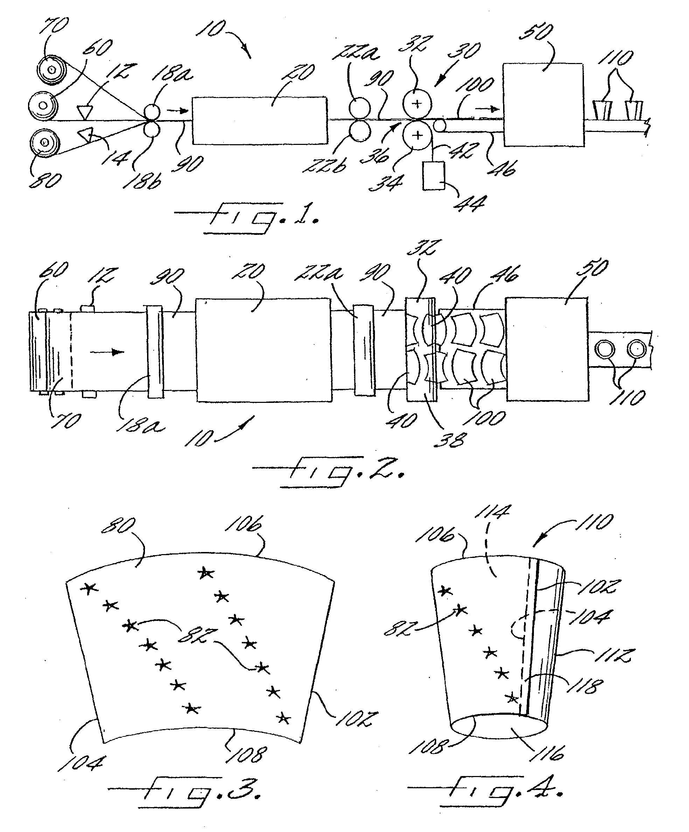

Referring now to the figures and, in particular, Figures 1 and 2, there is shown an apparatus **10** for forming blanks **100** and containers **110,** such as can be used for food packaging, according to one embodiment of the present invention. The illustrated apparatus **10** can be used to continuously adhere liner and label plies **70, 80** to a paper ply **60,** condition the resulting multilayer web **90,** cut the multilayer web **90** to form blanks **100**, and configure the blanks **100** into containers **110.** In other embodiments, however, the multilayer web **90** or the blanks **100** can be stored and used to form the containers **110** at a location or time other than immediately subsequent to the formation of the multilayer web **90.** For example, the multilayer web **90** can be formed and wound in rolls or coils, or the blanks **100** can be cut and stacked or otherwise stored.

The paper, liner, and label plies **60, 70, 80** can be provided as rolls of material, as shown in Figure 1. The particular material used for each ply **60, 70, 80** can vary and can be determined according to the intended contents and environment of the container **110**, weight and strength requirements, printing or other aesthetic requirements, the cost and availability of materials, and the like. For example, the paper ply **60** can be paperboard that is formed partially or entirely of recycled paper. The liner ply **70** can be formed of a moisture resistant layer, which can also act as a gas barrier. For example, the liner **70** can be a lamination of polyethylene, aluminum foil, polyethylene, and Kraft paper. The Kraft paper, which can be extensible Kraft, is disposed against the paper ply **60**, and the first polyethylene layer is directed away from the paper layer **60**. The label ply **80** can be formed of paper, polymers, foil plies, and the like. For example, the label **80** can be formed of **40** pound clay-coated one-side (C1S) Kraft paper, with the clay-coated side directed away from the paper ply **60**.

In one embodiment, the label **80** is a substantially opaque ply so that the color or other visual characteristics of the paper ply **60** are not readily visually apparent by viewing the outside of the container **110**. For example, the paper ply **60** can be formed of brown recycled paper, and the label ply **80** can cover the paper ply **60** so that the appearance of the container **110** is not affected, or only marginally affected, by the paper ply **60**. The label ply **80** can be printed or otherwise provided with indicia **82** such as graphics or text for purposes of identifying the contents of the container **110**, improving the aesthetic appearance of the container **110**, and the like. If the label ply **80** is opaque, an outer surface of the label ply **80** can be printed. Further, the label ply **80** can be printed before, after, or during the forming of the container **110**. For example, the label ply **80** can be printed before being adhered to the paper ply **60**, after the blank **100** has been formed, or after the container **110** has been formed from the blank **100**. Various methods can be used to print the label **80**, as are known in the art. In addition, the label ply **80** can be printed in a width larger than that used in the apparatus **10** and then cut to the desired width before being adhered to the paper ply **60**.

The liner and label plies **70, 80** are adhered to the paper ply **60**, for example, by applying an adhesive to one or more of the plies **60, 70, 80** so that the adhesive is disposed between the paper and liner plies **60, 70** and between the paper and label plies **60, 80**. As shown in Figure 1, the adhesive can be applied by adhesive applicators **12, 14** to a first side of the paper ply **60** that is directed toward the liner ply **70** and to a side of the label ply **80** that is directed toward the paper ply **60.** Alternatively, the adhesive can be applied to both sides of the paper ply **60** or to a side of the liner ply **70** that is directed toward the paper ply **60.** With the adhesive disposed between the plies **60, 70, 80,** the resulting multilayer web **90** can be passed through a nip **16** defined by two rollers **18a, 18b.** The rollers **18a, 18b** can be configured to apply a compressive force on the plies **60, 70, 80** so that the adhesive is disposed evenly and the multilayer web **90** is substantially uniform in thickness. Alternatively, the liner and label plies **70, 80** can be adhered to the paper ply **60** by other methods, for example, by heating the plies **70, 80** and laminating the plies **70, 80** on the paper ply **60** with a pre-applied thermoplastic polymer that bonds the plies **70, 80** to the paper ply **60**.

The multilayer web **90** then proceeds to a conditioning unit **20**, where the web 90 is heated or otherwise processed to promote uniform drying of the adhesive. The conditioning unit 20 can be a conventional oven, with convection air flow, through which the multilayer web **90** can be passed continuously. The multilayer web **90** may be passed through another nip defined by rollers **22a, 22b** to further consolidate and make uniform the web **90.** Additional rollers (not shown) can also be provided in the conditioning unit 20. Further, the conditioning unit **20** can spray water or otherwise introduce moisture to the web **90**. Thus, the conditioning unit **20** can be used to adjust a moisture content of the web **90** to a predetermined moisture level, thereby affecting the stiffness and pliability of the web **90**.

The multilayer web **90** is cut to form the blanks **100**, i.e., pieces of the multilayer web **90** having a predefined shape, each of which can be configured to form one of the containers **110.** The multilayer web **90** can be cut shortly after and continuously with the conditioning, as shown in Figures 1 and 2. Alternatively, the multilayer web **90** can be wound to form rolls of material that can be cut at another time and/or using a machine that is located remotely from the adhering and conditioning devices **12, 14, 20.** According to one advantageous embodiment of the present invention, a rotary die **30** is configured to cut the multilayer web **90** to form the blanks **100**. The rotary die **30** can include opposed rollers **32, 34** that define a nip **36** therebetween, and at least one of the rollers **32** can define an outer cutting surface **38** that defines a cutting feature **40**, such as a raised portion that corresponds in shape to the blank **100**. The other roller **34** can define a correspondingly opposed cutting feature (not shown) that contacts or receives the cutting feature **40** of the first roller **34**. The rollers **32, 34** are rotated as the multilayer web **90** is passed therebetween such that the multilayer web **90** is urged against the outer cutting surface **38**, the cutting feature **40** is impressed into or through the multilayer web **90**, and the web **90** is thereby cut to the desired shape of the blank **100**. The rotary die **30** can be used to cut the multilayer web **90** into the blanks **100** as the web **90** is passed continuously through the die **30**. Alternatively, other cutting devices can also be used for cutting the web **90**. For example, the blanks **100** can be cut using reciprocating dies, punches, flying blades or saws, and the like. Further, the cutting device can be integral to one of the other components of the apparatus **10**. For example, the cutting device can be integral to a wrapping device **50**, described further below, so that the multilayer web **90** can be formed and delivered directly to the wrapping device **50**, where a reciprocating die (not shown) cuts the web **90** to the desired dimensions.

The multilayer web **90** can be formed to have a width that is only slightly larger than a width of each blank **100**. Such a "single line" narrow web can be cut with a rotary die inline with the forming process and fed to the wrapping device **50**, or the web **90** can be fed directly into a wrapping device that is equipped to cut the blanks **100** from the web **90.** Alternatively, the width of the multilayer web **90** can be greater than the width of the blanks **100** so that multiple blanks **100** can be cut from the width of the web **90**. For example, two blanks **100** can be cut from the width of the web **90**, as shown in Figure 2. The blanks **100** can be fed directly into the wrapping device **50** or taken offline and fed to the wrapping device **50** at a later time. In any case, the rotary die 30 or other cutting device can be configured to minimize the amount of excess or scrap material **42**. For example, each of the two blanks **100** simultaneously cut by the rotary die **30** shown in Figure 2 is oriented oppositely relative to the other blank **100**.

Each blank **100** can be cut completely from the multilayer web **90** and the excess material **42** from the multilayer web **90** can be removed and deposited in a receptacle **44** for recycling or disposal. The resulting blanks **100,** which can be substantially flat, are deposited onto a conveying device 46 such as a continuous conveyor belt. The conveying device **46** can deliver the blanks **100** directly to a wrapping device **50,** as shown in Figures 1 and 2. Alternatively, the blanks **100** can be stacked and stored for subsequent use in a wrapping device remote to the forming apparatus **10**. Additionally, features can be provided on the blanks, for example, by folding or rolling the edges, depositing coatings or additional layers of material on the blanks, printing the blanks, and the like.

The blanks **100** shown in Figure 3 are substantially flat and extend between first and second converging edges **102,104**. Transverse ends **106,108** of the blanks **100** are curved. Thus, the illustrated blanks **100** can be bent, i.e., wrapped, folded, or otherwise configured to form a sidewall **112** of a container **110** that is at least partially conical and defines an interior space **114**. By the term "at least partially conical," it is meant that a portion of the container **110** defines at least part of a cone, e.g., a frustocone. In one advantageous embodiment of the present invention, the blanks **100** are bent about **360** degrees to form the single wrap container **110**, i.e., the first edge of the blank **100** is bent about **360** degrees to form a sidewall **112** of a tubular shape that defines an inner space **114** therein. For example, the first edge **102** can be joined to the second edge **104** by heat sealing or otherwise adhering the two edges **102,104** to form a seam **118** that extends substantially linearly along the container **110**. The tubular shaped sidewall **112** can be conical or frustoconical to define a circular cross section, or the sidewall **112** can have a cross section that defines a shape of another polygon, for example, a square, rectangle, triangle, and the like. Further, the sidewall **112** can define one or two open ends, which can be closed by attaching an end member, such as a bottom member **116** or a cap, to one or both of the open ends. For example, the blanks **100** can be used to form the frustoconical sidewall **112** of the container **110** shown in Figure **4,** such that the container **110** can receive part of a similar container for stacking. Alternatively, the blanks **100** can be bent to form containers **110** of other configurations, having uniform or non-uniform cross sections.

The wrapping device **50** is configured to bend the blanks **100** to form the containers **110**. For example, the wrapping device **50** can fold the blanks **100**, wind the blanks **100** around a mandrel, or otherwise bend the blanks **100**. Various devices can be used for forming the container **110**. For example, the wrapping device **50** can be a single wrap package forming machine such as the BMP 200 Paper Cup Machine made by Michael Hörauf Maschinenfabrik GmBH & Co. KG of Donzdorf, Germany, which can be used to bend each blank **100**, seal the edges **102,104**, and attach the bottom member **116** thereto. Further, the wrapping device **50** can be configured to cut the blanks **100** from the web **90** so that the web **90** can be fed directly from the conditioning device **20** to the wrapping device **50**, i.e., without being first cut in a rotary die **30** or other cutting device.

Many modifications and other embodiments of the inventions set forth herein will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method of constructing a single wrap container, the method comprising:
providing a paper ply having first and second opposite sides;
adhering a liner ply to the first side of the paper ply and a label ply to the second side of the paper ply to thereby form a multilayer web;
cutting the multilayer web with a die to form a substantially flat blank for forming the single wrap container; and
bending the blank and joining first and second edges of the blank to form a single wrap container defining an interior space.

2. A method according to Claim 1 wherein said providing step comprises providing paperboard formed at least partially of recycled paper.

3. A method according to Claim 1 wherein said adhering step comprises substantially covering the first and second sides of the paper ply.

4. A method according to Claim 1 wherein said adhering step comprises disposing an adhesive between the liner ply and the paper ply and between the label ply and the paper ply and passing the multilayer web through a nip formed by opposing rollers.

5. A method according to Claim 1 further comprising coiling the multilayer web after said adhering step to form a roll before said cutting step.

6. A method according to Claim 1 further comprising heating the multilayer web and thereby conditioning the multilayer web to adjust a moisture content of the web to a predetermined level.

7. A method according to Claim 1 further comprising printing indicia on the label before said adhering step.

8. A method according to Claim 7 wherein said printing and adhering steps comprise printing a first side of the label ply and adhering a second side of the label ply to the paper ply such that the first side of the label ply is directed away from the paper ply.

9. A method according to Claim 1 wherein said cutting step comprises cutting more than one blank from a width of the multilayer web.

10. A method according to Claim 1 wherein said cutting step comprises urging the multilayer web against an outer cutting surface of a rotary die and rotating the rotary die.

11. A method according to Claim 1 wherein said bending step comprises bending the blank to form a linear interface between the first and second edges of the blank.

12. A method according to Claim 1 wherein said bending step comprises bending the blank by about 360 degrees to form the single wrap container.

13. A method according to Claim 1 wherein said cutting step comprises cutting the multilayer web to define the first and second edges of the blank in a nonparallel configuration, and wherein said bending step comprises bending the blank to form the container such that the container is at least partially conical.

14. A method according to Claim 1 further comprising attaching at least one end member to the container, thereby closing at least one end of the container.

15. A method of forming a blank for use in constructing a single wrap container, the method comprising:
providing a paper ply having first and second opposite sides;
adhering a liner ply to the first side of the paper ply and a label ply to the second side of the paper ply to thereby form a multilayer web; and
cutting the multilayer web with a die to form a substantially flat blank for forming the single wrap container.

16. A method according to Claim 15 wherein said providing step comprises providing paperboard formed at least partially of recycled paper.

17. A method according to Claim 15 wherein said adhering step comprises substantially covering the first and second sides of the paper ply.

18. A method according to Claim 15 wherein said adhering step comprises disposing an adhesive between the liner ply and the paper ply and between the label ply and the paper ply and passing the multilayer web through a nip formed by opposing rollers.

19. A method according to Claim 15 further comprising coiling the multilayer web after said adhering step to form a roll before said cutting step.

20. A method according to Claim 15 further comprising conditioning the multilayer web to adjust a moisture content of the web to a predetermined level.

21. A method according to Claim 15 further comprising printing indicia on the label before said adhering step.

22. A method according to Claim 15 wherein said printing and adhering steps comprise printing a first side of the label ply and adhering a second side of the label ply to the paper ply such that the first side of the label ply is directed away from the paper ply.

23. A method according to Claim 15 wherein said cutting step comprises cutting more than one blank from a width of the multilayer web.

24. A method according to Claim 15 wherein said cutting step comprises urging the multilayer web against an outer cutting surface of a rotary die and rotating the rotary die.

25. A single wrap container formed from a blank, the container comprising:
a multilayer web sidewall extending circumferentially between first and second edges joined at a seam, the sidewall having a paper ply with first and second opposite sides, a liner ply adhered to the first side of the paper ply and a label ply adhered to the second side of the paper ply, the sidewall being singly wrapped such that the seam is substantially linear.

26. A container according to Claim 25 wherein the paper ply is formed at least partially of recycled paper.

27. A container according to Claim 25 wherein the liner and label plies substantially cover the first and second sides of the paper ply.

28. A container according to Claim 25 wherein the label ply is opaque and defines indicia printed on an outer surface thereof.

29. A container according to Claim 25 further comprising an end member joined to the sidewall to at least partially close the container.

30. A container according to Claim 25 wherein at least one of the liner and label plies are formed of a polymer.

31. A container according to Claim 25 wherein the liner comprises a material which is substantially impermeable to gas and moisture, the label ply comprises a material capable of being printed, and the paper ply comprises recycled paper.
